# FASCICULE DE BREVET EUROPEEN

(11) **EP 0 933 856 B1**
(45) Date de publication et mention de la délivrance du brevet: **15.05.2002**
(21) Numéro de dépôt: 99400191.5
(22) Date de dépôt: 27.01.1999
(51) Int. Cl.: H02G 15/04

(54) **Manchon d'étanchéité rétractable à froid pour câble électrique**
Kaltschrumpfbare Dichtungsmuffe für elektrische Kabel
Cold shrinkable sealing sleeve for electrical cable

(30) Priorité: 30.01.1998 FR 9801077
(43) Date de publication de la demande: 04.08.1999
(73) Titulaire: Société Electricité Radio Aviation Mécanique, 92000 Nanterre (FR)
(72) Inventeur: Bouny, Noel, 78100 Saint Germain en Laye (FR)
(74) Mandataire: Keib, Gérard

(56) Documents cités:
- DE-A- 4 414 355
- DE-U- 9 011 333
- GB-A- 2 181 904
- US-A- 3 992 570

## Description

La présente invention concerne un manchon d'étanchéité rétractable à froid destiné à protéger un câble électrique multifilaire contre l'humidité comportant une première extrémité munie d'une ouverture pour l'introduction du câble à protéger, et une deuxième extrémité munie d'une pluralité d'orifices pour permettre le passage des fils conducteurs. Le document GB-A-2 181 904 décrit un manchon d'étanchéité rétractable à froid selon le préambule de la revendication 1. L'invention concerne également un procédé de montage dudit manchon sur ledit câble et un câble électrique multifilaire comportant un tel manchon.

Les câbles électriques multifilaires, tels que les câbles d'énergie et les câbles téléphoniques par exemple, sont généralement constitués par une pluralité de fils conducteurs isolés de façon individuelle et réunis dans une enveloppe de protection contre les chocs mécaniques. Ces câbles sont généralement enterrés dans le sol et émergent dans des coffrets ou dans des armoires. Il convient donc de protéger, d'une part, ces coffrets et ces armoires contre une éventuelle arrivée d'eau par les câbles si ces derniers ont été perforés accidentellement et, d'autre part, il est nécessaire de protéger les câbles contre une éventuelle arrivée d'eau à partir des coffrets en cas d'inondation de ces derniers.

Une solution connue pour résoudre ce problème consiste à envelopper le bout du câble par lequel sortent les fils conducteurs par une gaine thermorétractable qui, pour venir enserrer le bout dudit câble électrique, doit être chauffée après son montage sur ledit câble.

Cette solution présente l'inconvénient de nécessiter une étape de chauffage de ladite gaine thermorétractable qui a pour effet de prolonger le temps de montage et qui risque de détériorer le matériau ou le câble.

Une autre solution connue par exemple du document GB-A-2 181 904 consiste à utiliser une gaine en matériau élastomère dans laquelle est introduit un fil spiralé s'étendant sur toute sa longueur, de manière à la maintenir ouverte lors de son montage autour du câble multifilaire, le fil spiralé étant ensuite retiré après l'insertion du bout du câble électrique dans ladite gaine.

Le fait que cette solution nécessite l'introduction du fil spiralé dans la gaine, a pour effet, d'une part, d'en prolonger le temps de fabrication et de montage, et d'autre part, d'en accroître le coût.

Le but de l'invention est de pallier les inconvénients mentionnés ci-dessus au moyen d'un manchon d'étanchéité rétractable à froid dont le coût est réduit, et qui soit facile à installer sur le câble multifilaire.

Selon l'invention, ce manchon est réalisé en un matériau élastique et comprend un support annulaire rigide dont le diamètre est légèrement supérieur à celui du câble à protéger, et autour duquel la première extrémité est repliée vers la deuxième extrémité et maintenue par élasticité, ladite première extrémité étant dépliable pour venir enserrer par élasticité le bout du câble lors de l'utilisation.

Ceci permet une meilleure ergonomie pour la mise en place du manchon sur le câble qui peut être effectuée rapidement en alignant simplement le câble sur le support annulaire.

Le manchon selon l'invention ne nécessite pas de matériau particulier et peut être fabriqué à partir d'un matériau élastique peu coûteux. En outre, son montage sur le câble est notablement simplifié dans la mesure où aucun traitement ultérieur n'est nécessaire pour en assurer la rétractabilité.

D'autres caractéristiques et avantages de l'invention ressortiront de la description qui va suivre, prise à titre d'exemple non limitatif, en référence aux figures annexées dans lesquelles :
- la figure 1 représente, en coupe verticale partielle, un manchon d'étanchéité selon l'invention ;
- la figure 2 représente schématiquement une vue de dessus du manchon d'étanchéité représenté à la figure 1 ;
- les figures 3 à 5 illustrent les étapes de montage d'un manchon selon l'invention sur un câble multifilaire.

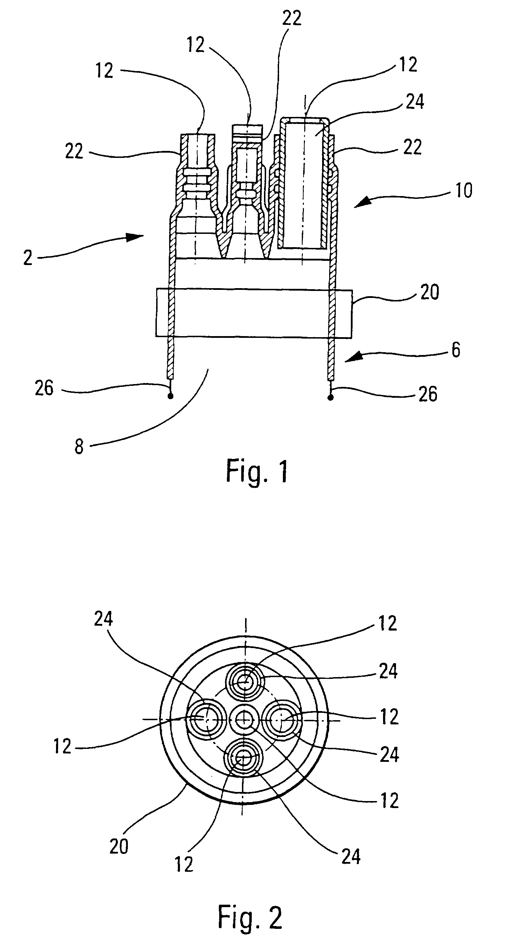

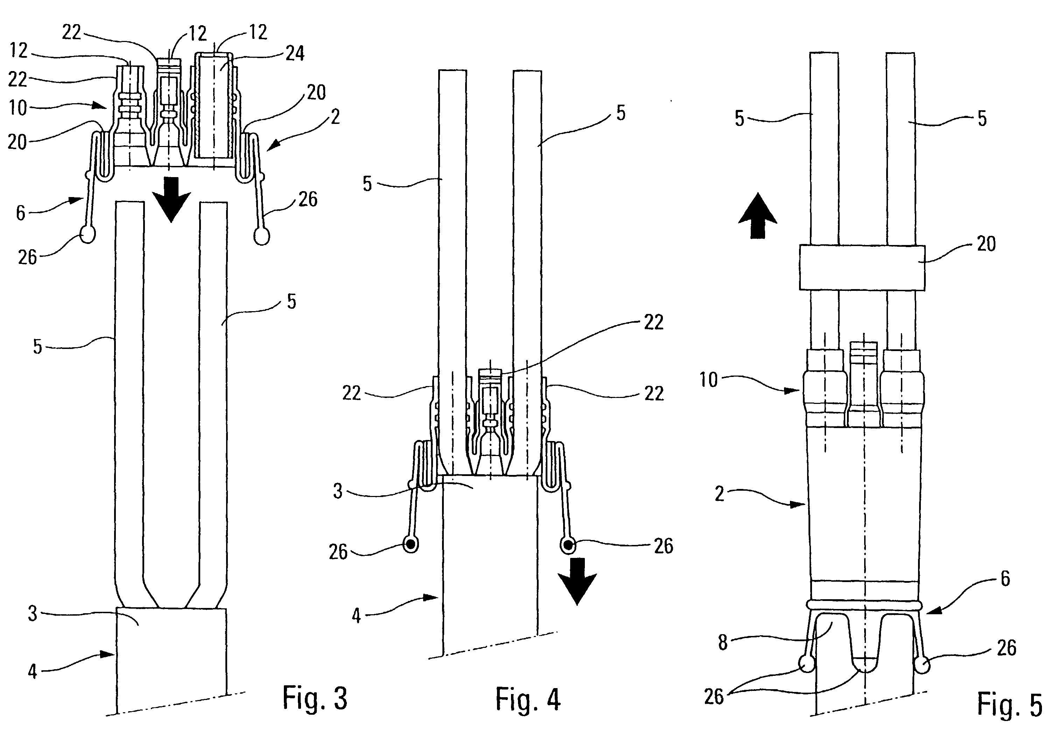

En se référant aux figures 1, 2 et 3, le manchon d'étanchéité 2 est destiné à entourer le bout 3 du câble électrique 4 par lequel sortent les fils conducteurs 5 et comporte une première extrémité 6 munie d'une ouverture 8 pour l'introduction du câble 4 à protéger, et une deuxième extrémité 10 munie, dans cet exemple particulier de réalisation, de cinq orifices 12 pour permettre le passage de cinq fils conducteurs 5. Bien entendu le nombre d'orifices 12 ainsi que le nombre de fils conducteurs peuvent varier en fonction du type de câbles à protéger. Ces fils conducteurs peuvent eux-mêmes être constitués par un faisceau de filaments entourés par une même gaine. En outre, chacun de ces orifices 12 peut être, soit ouvert, lorsqu'il est utilisé pour permettre le passage d'un fil conducteur 5 comme cela est le cas pour les orifices latéraux 12 dans l'exemple représenté sur les figures 3, 4 et 5, soit fermé lorsque le câble électrique ne comporte pas de fil conducteur 5 correspondant comme cela est le cas pour l'orifice central 12 dans l'exemple représenté sur lesdites figures 3, 4 et 5. L'ouverture des orifices fermés pouvant se faire très simplement par simple découpage.

Comme on peut le voir à la figure 3, avant le montage du manchon 2 sur le câble 4, la première extrémité 6 est repliée sur un support annulaire rigide 20 autour duquel elle est maintenue par élasticité. Le diamètre dudit support 20 est légèrement supérieur à celui du câble 4 de manière à faciliter l'introduction de ce dernier à travers l'Quverture 8. Ce support 20 peut être retiré après le montage du manchon 2 sur le câble 4.

Selon un mode préféré de réalisation de l'invention, chacun des orifices 12 se prolonge par un embout 22 qui peut être muni d'un élément tubulaire rigide 24, amovible, permettant de maintenir lesdits orifices suffisamment ouverts pour permettre le passage des fils conducteurs 5. Pour des raisons de clarté des figures, un seul embout latéral est représenté sur les figures 1 2 et 3 avec un élément tubulaire 24. Bien entendu, préférentiellement, chaque embout 22 comporte un élément tubulaire 24.

Lesdits éléments tubulaires rigides 24 peuvent être retirés après le montage et peuvent être soit des tubes cylindriques ouverts à leurs deux bouts et faisant saillie au - dessus de l'embout pour être retirés manuellement, soit des tubes ouverts uniquement au bout par lequel arrivent les fils conducteurs et fermés à l'autre bout. Dans ce cas, lesdits éléments sont retirés de l'embout par une action de poussée exercée par les fils conducteurs, sur le bout fermé, lors de leur introduction dans les embouts.

Comme on peut le voir sur les figures 3 à 5, la première extrémité 6 du manchon 2 comporte quatre pattes 26 permettant de tirer sur l'extrémité inférieure 6 afin de la déplier pour enserrer le bout du câble 4 à protéger.

Les figures 3, 4 et 5 illustrent le procédé de montage du manchon 2 sur le bout du câble 4. Ce procédé consiste à replier la première extrémité 6 dudit manchon 2 sur un support annulaire rigide 20, comme cela est représenté à la figure 3, cette étape étant effectuée préférentiellement en usine, puis à faire passer les fils conducteurs 5 à travers les orifices 12 pratiqués sur ladite deuxième extrémité 10, ensuite à tirer sur les pattes 26, comme cela est schématisé par une flèche sur la figure 4, afin de déplier ladite première extrémité 6 autour du bout du câble 4 de telle sorte que ledit manchon 2 vienne enserrer ledit bout du câble 4, et enfin à retirer le support annulaire 20, comme cela est schématisé par une flèche à la figure 5.

## Revendications

1. Manchon (2) d'étanchéité rétractable à froid conçu pour être monté à l'extrémité d'un câble électrique multifilaire (4) comportant un bout (3) d'où sortent une pluralité de fils conducteurs (5), le manchon (2) comprenant une première extrémité (6) munie d'une ouverture (8) prévue pour l'introduction du câble (4) à protéger, et une deuxième extrémité (10) munie d'une pluralité d'orifices (12) prévus pour le passage des fils conducteurs (5),
caractérisé en ce ledit manchon est réalisé en un matériau élastique et comprend un support annulaire (20) rigide, dont le diamètre est légèrement supérieur à celui du câble à protéger, et autour duquel la première extrémité (6) est repliée vers la deuxième extrémité (10) et maintenue par élasticité ladite première extrémité (6) étant dépliable pour venir enserrer par élasticité le bout du câble (4) lors de l'utilisation.

2. Manchon selon la revendication 1, **caractérisé en ce que** chacun des orifices (12) se prolonge par un embout (22) fermé qui peut être ouvert pour permettre le passage d'un fil conducteur (5).

3. Manchon selon la revendication 1 ou 2, **caractérisé en ce que** chaque orifice (12) est muni d'un élément tubulaire rigide (24) pour maintenir lesdits orifices (12) suffisamment ouverts pour permettre le passage des fils conducteurs (5).

4. Manchon selon la revendication 3, **caractérisé en ce que** l'élément tubulaire (24) est un tube cylindrique ouvert à ses deux bouts.

5. Manchon selon la revendication 3, **caractérisé en ce que** l'élément tubulaire (24) est un tube cylindrique ouvert à l'un des bouts, par lequel les fils conducteurs (5) sont aptes à arriver et fermé à l'autre bout.

6. Manchon selon l'une des revendications 1 à 5, **caractérisé en ce que** la première extrémité (6) comporte au moins deux pattes (26) permettant de la tirer de manière à la déplier pour enserrer le bout (3) du câble (4) par lequel sortent les fils conducteurs (5).

7. Procédé de montage d'un manchon (2) d'étanchéité sur un câble électrique multifilaire selon l'une des revendications 1 à 6, **caractérisé en ce qu'**il consiste à replier la première extrémité (6) dudit manchon (2) sur un support annulaire rigide (20), puis à faire passer les fils conducteurs (5) à travers les orifices (12) pratiqués sur ladite deuxième extrémité (10) dudit manchon, ensuite à déplier ladite première extrémité (6) autour du bout (3) du câble (4) de telle sorte que ledit manchon (2) vienne enserrer ledit bout (3) du câble (4), et enfin à retirer le support annulaire (20).

8. Procédé de montage d'un manchon (2) selon la revendication 7, **caractérisé en ce que** ladite première extrémité (6) est dépliée en tirant sur des pattes (26) la prolongeant.

## Claims

1. Cold-shrinkable sealing sleeve (2) designed to be mounted on the end of a multi-conductor electrical cable (4) having an end (3) from which a plurality of conducting wires (5) emerge, the sleeve (2) having a first end (6), provided with an opening (8) intended for inserting the cable (4) to be protected, and a second end (10), provided with a plurality of orifices (12) through which the conducting wires (5) are intended to pass,
**characterized in that** the said sleeve is made of an elastic material and comprises a rigid annular support (20), the diameter of which is slightly greater than that of the cable to be protected, and the first end (6) is folded over the said rigid annular support (20) towards the second end (10) and held in position by elasticity, the said first end (6) being able to be unfolded in order to grip, by elasticity, the end of the cable (4) during use.

2. Sleeve according to Claim 1, **characterized in that** each of the orifices (12) is extended by a closed end-piece (22) which can be opened in order to allow passage for a conducting wire (5).

3. Sleeve according to Claim 1 or 2, **characterized in that** each orifice (12) is provided with a rigid tubular element (24) for holding the said orifices (12) open sufficiently to allow passage for the conducting wires (5).

4. Sleeve according to Claim 3, **characterized in that** the tubular element (24) is a cylindrical tube open at both its ends.

5. Sleeve according to Claim 3, **characterized in that** the tubular element (24) is a cylindrical tube open at one of the ends, via which the conducting wires (5) are able to enter, and closed at the other end.

6. Sleeve according to one of Claims 1 to 5, **characterized in that** the first end (6) includes at least two tabs (26) allowing the first end to be pulled so as to unfold it, in order to grip the end (3) of the cable (4) from which the conducting wires (5) emerge.

7. Method of mounting a sealing sleeve (2) on a multi-conductor electrical cable according to any one of Claims 1 to 6, **characterized in that** it consists in folding back the first end (6) of the said sleeve (2) over a rigid annular support (20), then in making the conductor wires (5) pass through the orifices (12) made on the said second end (10) of the said sleeve, next in unfolding the said first end (6) around the end (3) of the cable (4) in such a way that the said sleeve (2) grips the said end (3) of the cable (4) and, finally, in removing the annular support (20).

8. Method of mounting a sleeve (2) according to Claim 7, **characterized in that** the said first end (6) is unfolded by pulling on the tabs (26) extending the said first end.

## Patentansprüche

1. Kaltschrumpfbare Dichtungsmuffe (2), dazu gedacht, an einem Ende eines mehradrigen elektrischen Kabels (4) angebracht zu werden, das einen Stumpf (3) aufweist, aus welchem eine Mehrzahl von Leiterdrähten (5) austreten, wobei die Muffe (2) aufweist ein erstes Ende (6), das mit einem Öffnungsraum (8) versehen ist, der zur Einführung des zu schützenden Kabels (4) vorgesehen ist, und ein zweites Ende (10), das mit einer Mehrzahl von Öffnungen (12) versehen ist, die für den Durchgang der Leiterdrähte (5) vorgesehen sind,
**dadurch gekennzeichnet, daß** die Muffe aus einem elastischen Material ausgeführt ist und ein steifes, ringförmiges Stützelement (20) umfaßt, dessen Durchmesser ein wenig größer ist als derjenige des zu schützenden Kabels und um welches herum das erste Ende (6) zum zweiten Ende (10) hin zurück gebogen ist und durch Elastizität das erste Ende (6) aufbiegbar hält, um den Stumpf des Kabels (4) bei Benutzung elastisch aufzunehmen.

2. Muffe nach Anspruch 1, **dadurch gekennzeichnet, daß** jede der Öffnungen (12) sich durch einen geschlossenen Ansatz (22) verlängert, der offen sein kann, um den Durchgang eines Leiterdrahtes (5) zu gestatten.

3. Muffe nach Anspruch 1 oder 2, **dadurch gekennzeichnet, daß** jede Öffnung (12) mit einem steifen, rohrförmigen Element (24) versehen ist, um die Öffnungen (12) ausreichend offen zu halten, um den Durchgang der Leiterdrähte (5) zu gestatten.

4. Muffe nach Anspruch 3, **dadurch gekennzeichnet, daß** das rohrförmige Element (24) ein an seinen Stümpfen offenes Zylinderrohr ist.

5. Muffe nach Anspruch 3, **dadurch gekennzeichnet, daß** das rohrförmige Element (24) ein Zylinderrohr ist, das an einem der Stümpfe offen ist, durch welchen die Leiterdrähte (5) eintreten können, und an dem anderen Stumpf geschlossen ist.

6. Muffe nach einem der Ansprüche 1 bis 5, **dadurch gekennzeichnet, daß** das erste Ende (6) wenigstens zwei Klemmen (26) aufweist, die erlauben, dieses in der Weise zu ziehen, daß dieses aufgebogen wird, um den Stumpf (3) des Kabels (4), durch welche die Leiterdrähte (5) austreten, einzuspannen.

7. Verfahren zur Montage einer Dichtungsmuffe auf einem mehradrigen elektrischen Kabel nach einem der Ansprüche 1 bis 6, **dadurch gekennzeichnet, daß** dieses darin besteht, das erste Ende (6) der Muffe (2) auf ein steifes, ringförmiges Stützelement (20) zurück zu biegen, dann die Leiterdrähte (5) durch die Öffnungen (12) hindurch zu bringen, die auf dem zweiten Ende (10) der Muffe ausgebildet sind, anschließend das erste Ende (6) um den Stumpf (3) des Kabels (4) herum derart aufzubiegen, daß die Muffe (2) den Stumpf (3) des Kabels (4) einspannen kann, und schließlich das ringförmige Stützelement (20) zurück zu ziehen.

8. Verfahren zur Montage einer Muffe (2) nach Anspruch 7, **dadurch gekennzeichnet, daß** das erste Ende (6) auf gebogen wird, indem die dieses verlängernden Klemmen (26) gezogen werden.
